(19) Europäisches Patentamt

European Patent Office

Office européen des brevets

(11) Publication number: **0 307 625 B1**

# (12) EUROPEAN PATENT SPECIFICATION

(45) Date of publication of patent specification: **20.04.94**  (51) Int. Cl.⁵: **G01N 21/35**, G01N 21/25

(21) Application number: **88113120.5**

(22) Date of filing: **12.08.88**

(54) **Optical gas analyzer.**

(30) Priority: **15.09.87 SE 8703564**

(43) Date of publication of application:
**22.03.89 Bulletin  89/12**

(45) Publication of the grant of the patent:
**20.04.94 Bulletin  94/16**

(84) Designated Contracting States:
**BE CH DE ES FR GB IT LI NL**

(56) References cited:
EP-A- 0 123 458      WO-A-83/00613
DE-B- 2 727 976      GB-A- 2 117 112
US-A- 2 806 144      US-A- 3 702 397
US-A- 3 836 255      US-A- 4 180 734
US-A- 4 320 297

(73) Proprietor: **GAMBRO ENGSTRÖM AB**
**Box 201 09**
**S-161 20 Bromma(SE)**

(72) Inventor: **Nilsson, Lars Erik**
**Bygatan 66**
**S-191 46 Sollentuna(SE)**

(74) Representative: **Boberg, Nils Gunnar Erik**
**Gambro AB**
**Patent Department**
**Box 10101**
**S-220 10 Lund (SE)**

EP 0 307 625 B1

Rank Xerox (UK) Business Services
(3.10/3.09/3.3.3)

**Description**

TECHNICAL FIELD

An optical gas analyzer for measuring anaesthesia gases such as halothane, isoflurane and enflurane, said analyzer comprising a source of radiation, means for conducting radiation obtained by said source through a gas sample and a number of optical filters corresponding to the number of gases analysed, each of said filters allowing through a wavelength representative for the particular gas and especially absorbed by the same, to a number of detectors corresponding to the number of gases analysed, means being provided for dividing the radiation path after passing of the gas sample for the purpose of simultaneous measurement of the gas concentration in respective detectors.

BACKGROUND ART

Today gas analyzers are found on the market which operate essentially in accordance with four different principles:
a) Mass spectrometry
b) Raman spectrometry
c) IR-spectrometry
d) Change of mass of quartz crystals
a) Mass spectrometers are expensive (>300 kkr) but quick, they mesure all gases and produce relatively good accuracy. They require qualified operators.
b) Raman spectrometers are also expensive (100-200 kkr). They are new in this application. Quickness, accuracy and stability have not yet been documented. They presumably require qualified operators.
c) IR-based instruments are the most common. They are relatively cheap, stable and do not require qualified operators. The accuracy depends on the design. For carbon dioxide and laughing gas the instruments on the market today are sufficiently quick for endtidal measurements, but up to now the instrument has been to slow for anaesthesia gases.
d) Instruments based on quartz crystals are very cheap. They exist only for anaesthesia gases. They are quick, but unfortunately unstable and have a short life. They have limited accuracy because, i a., of the influence of e g laughing gas and water vapour.

A measuring system based on infrared rests on the principle that the substance to be analysed absorbs IR-radiation of wavelengths which are unique of the substance in question. IR-radiation is generated by a source of radiation which emits continuously radiation over a large wavelength range. With the help of e g an optical filter the correct wavelength is chosen and the radiation is detected by an IR-detector which transduces the incident radiation energy to a proportional electrical signal. The choice of the analytical wavelength for a substance is very critical and wholly decisive for system characteristics such as accuray and quickness. In practice the choice is governed by whether several of the substances present absorb at or near the wavelength chosen, and whether it is technically/economically possible to measure radiation of this wavelenght to the specified accuracy requirement.

Today the existing IR instruments for carbon dioxide and laughing gas have been optimized to such a degree, that any improvements concerning performance for these substances are hardly possible.

For anaesthesia gases the position is different. The absence of suitable commercial IR-detectors has had the result that IR instruments for these gases have been forced to operate with short wavelengths, where the gases have very low absorption. This has meant instruments which need large sample volumes and which, therefore, will be slow. Measurements, moreover, have been disturbed by water vapour in the gases analysed.

For a few years now, however, detectors have been on the market which allow measurement at longer wavelengths, where the gases are absorbing much more strongly. An instrument which makes use of these wavelengths therefore requires a very small sample volume and consequently can be quick.

For end-tidal measurement the measuring system in some manner has to receive information indicating when the respiratory phase approaches the end. This information can be obtained through measurement of the carbon dioxide content, and instruments which measure the end-tidal carbon dioxide contents have been known for a long time (capnometers, capnographs). On passage through the carbon dioxide meter, however, the sample gas will get mixed up and an anaesthesia gasmeter coupled in series will receive a phase-displaced and distorted sample, that is to say any curves recorded will receive a profile distortion.

As regards the prior art reference is also being made to GB-A-2 117 112, US-A-4 320 297, and WO-A-83/00613. The devices described in said publications are, however, according to the oppinion of the applicant, not accurate and effective enough for measuring anaesthesia gases mixed with other gases.

DISCLOSURE OF INVENTION

The invention thus relates to an optical gas analyzer for measuring anaesthesia gases such as halothane, isoflurane and enflurane, said analyzer comprising a source of radiation, means for conducting radiation obtained by said source through a gas sample and a number of optical filters corresponding to the number of gases analysed, each of said filters allowing through a wavelength representative for the particular gas and especially absorbed by the same, to a number of detectors corresponding to the number of gases analysed, means being provided for dividing the radiation path after passing of the gas sample for the purpose of simultaneous measurement of the gas concentration in respective detectors.

More particularly, the gas analyzer in accordance with the invention is characterized by a filter which is permeable for the wavelengths only between 8 - 14$\mu$, preferably about 8,81$\mu$, and an $N_2O$-filter and a $CO_2$-filter which are only permeable for wavelengths within 3,8 - 5$\mu$, preferably about 3,90$\mu$ and 4,26$\mu$, respectively, whereby moisture is prevented from affecting the respective measuring result.

However, the $N_2O$ content here may affect the measuring result for the anaesthesia gases and for this reason suitable means are provided for correction of the absorption caused by $N_2O$ recorded by the anaesthesia detector as a function of the measure value obtained at the same time in the $N_2O$ detector.

The said means for the division of the radiation path consists appropriately of a mirror arrangement which preferably divides the radiation path into a number of equivalent ray bundles corresponding to the number of gases analysed. It will be obvious, however, to those versed in the art that other arrangements too may be used, e g collective optical lenses, provided these allow through the wavelengths selected.

In a practical embodiment of the subject of the invention the gas analysed is passed through a cell or the like with two windows of, for example, $CaF_2$ (calcium fluoride) transparent for the radiation, placed in the radiation path. As further examples of suitable material might be mentioned $BaF_2$ (barium fluoride), CdTe (cadmium telluride), Ge (germanium) and ZnS (zinc sulphide-Itran II).

Preferably means are provided for keeping constant the temperature of the items, e g filters, mirrors, lenses and detectors together with holder for these items, situated in the radation path. At the same time the keeping constant of the temperature in the gas analysed is aimed at, this temperature being above the dew point of any water vapour present therein.

In a preferred embodiment of the gas analyzer according to the invention the same is provided with means for the continuous conducting of the gas mixture analysed through the radiation path and with means, e g a rotating diaphragm, for the regular interruption of the radiation path so as to obtain intermittent meauring values.

In monitoring a patient during anaeshetic treatment it is endeavoured to determine the end-tidal measuring value of the respective gases. For this reason the gas analyzer in accordance with the invention is provided appropriately with means for utilizing the measuring values obtained in the $CO_2$ detector for the determination of the end of the repective expiratory phase. For example, microcomputers included in the analyzer can be programmed so that they indicate the end of each expiratory phase.

The source of radiation appropriately consists of an IR-source which emits a continous radiation over a large wavelength range, e g a thermal lamp with an envelope of quartz glass which absorbs the thermal radiation from the incandescent filament and in this way is heated so that it in turn gives off the desired radiation. This radiation can be amplified within the desired wavelength range, if the heat source outermost is surrounded by a thin metal envelope with oxidized outer surface, e g an envelope of steel or brass, preferably black-nickel-plated brass.

BRIEF DESCRIPTION OF THE DRAWINGS

Fig 1 shows schematically the radiation path in a gas analyzer in accordance with the present invention.

Fig 2 shows in a little more detail, but still schematically, a gas analyzer in accordance with the invention.

Fig 3 shows the absorption curves for $N_2O$ and for the aforementioned anaesthesia gases and the transmission curves for the filters used for the respective gases in accordance with the invention.

BEST MODE OF CARRYING OUT THE INVENTION

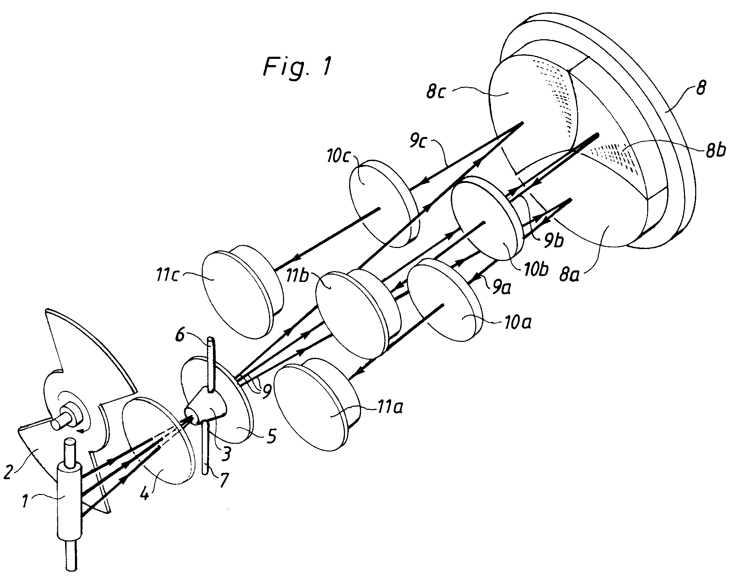

Figure 1 thus shows a schematic illustration of the radiaion path in a gas analyzer according to the invention. On the left is shown a cylindrical light source 1, which, for example, may consist of a heated body. The radiation from the source passes a rotating diaphragm 2 which chops it up in time (on account of the detection principle). Thereafter the radiation passes a conically shaped cell 3 which is delimited by two windows 4 and 5 which are transparent for the actual radiation. For reasons of clarity the window 4 is shown separate from the rest of the cell. Numeral 6 refers to the inlet for the gas mixture examined and 7 to the outlet for the same.

From the cell 3 the radiation is conducted further to a three-part mirror 8 which divides up the original ray bundle 9 into three part bundles 9a, 9b and 9c respectively to be directed through three filters 10a, 10b and 10c respectively and further from these to three detectors 11a, 11b and 11c respectively.

When the gas analyzer shown is used for the measuring of anaesthesia gases, the detector 11a is constituted preferably of a $CO_2$ detector, the filter 10a being of the kind which allows through the wavelength $4,26\mu$ representative for $CO_2$. In the same way the detector 11b at the same time may be constitued of an $N_2O$ detector, the filter 10b being selected to allow through a wavelength representative for the same, e g $3,90\mu$. The detector 11c finally is used for the actual measurement of the anaesthesia gas used. The filter 10c in such a case is chosen so that it allows through a wavelength representative for this, e g $8,81\mu$.

In fig 1, for the sake of clarity, the different filters and detectors have been shown as separate units. Appropriately they are built together instead into three units, that is to say one unit for each wavelength.

Each part of mirror 8a, 8b and 8c respectively is designed as a segment of a circle of 120°. The parts of mirror, moreover, have an "off-axis" placing in relation to the cuvette, whose windows therefore will be pictured three times on a periphery of a circle. In this manner the radiation can be conducted easily via the respective filter to the respective detector for simultaneously reading of the respective amounts of gas.

ANALYTICAL WAVELENGTHS

For carbon dioxide there exists only one practically usable wavelength, namely $4,26\mu$. For $N_2O$, that is to say laughing gas, there are several. For technical reasons the wavelength $3,90\mu$ preferably is used here. For the three anaesthesia gases a great number of wavelengths exist, which may be used in principle. To avoid interference from water vapour, and to make possible a test volume which is as small as possible, the appropriate wavelength is $8,81\mu$. This wavelength, moreover, has the advantage that it can be used for the analysis of all the abovementioned three anaesthesia gases, which renders the design much less expensive. The analysis is slightly disturbed, though, by laughing gas, so that the same has to be measured separately for compensation. How this compensation is done will be described in more detail in the following. The laughing gas content is also of direct clinical interest.

DETECTORS

Until a few years ago measurements at wavelengths over $5\mu$ were practically impossible in this type of instrument owing to the non-existence of suitable detectors. The coming into being of pyroelectric detectors has altered the situation and made possible measurement also at wavelengths where anaesthesia gases strongly absorb the radiation.

OPTICAL ELEMENT

In order to measure at three wavelenghts the radiation, which passes the cell comprising the gas sample, thus has to be divided over three filter/detector systems. A distinction may be made here between division in time and in space. In accordance with the invention spatial division is used, and the three parts of mirror each forward their part of the total radiation to the respective detector.

The parts of mirror also fulfil the task of collecting the radiation from the IR source over a large solid angle. Since pyroelectric detectors create quite a lot of noise, they call for plenty of signal. This is particularly important in the rapid detection which is needed for end-tidal measurements. The amount of radiation which strikes the detector is directly proportional to the solid angle under which the detector "sees" the light source, or the angle under which the mirror collects the radiation. The three parts of the mirror are functionally separate units but may be manufactured as one component e g by casting or compression moulding in plastics, diamond turning in aluminium or pressing of glass.

## SOURCE OF RADIATION

As a source of radiation preferably a hot-body radiator is used which may consist of an ordinary 12V/20W halogen bulb run at approx. 12W. The envelope of the bulb may consist of quartz glass which absorbs all IR radiation from the incandescent wire and is heated. The envelope in turn gives off radiation of longer wavelengths according to Planck's radiation law. It is thus the hot glass envelope which constitutes the actual source. This source is used today in this form in a $CO_2$ analyzer sold by the applicant under the name of ELIZA. Unfortunately, though, quartz has a relatively low coefficient of emission at the particular wavelengths and the source, therefore, is wholly ineffective at, for example, a wavelength of $8,8\mu$. Certain metal oxides, however, are known to have high coefficients of emission in infrared. The efficiency of the source can be raised, therefore, if the quartz envelope is surrounded by a thin metal envelope whose surface has been oxidized. This envelope may be constituted of a tube with a wall thickness of 0,5 mm which has been oxidized either in a flame or chemically. Successful experiments have been carried out with brass and stainless steel which both increased the radiation efficiency 2,5-2,7 times at $8,8\mu$ and approx. 1,5 times at $4,25\mu$. Corresponding improvements and even better results ought to be obtainable with black-nickel-plated brass.

## CORRECTION OF INTERFERENCE

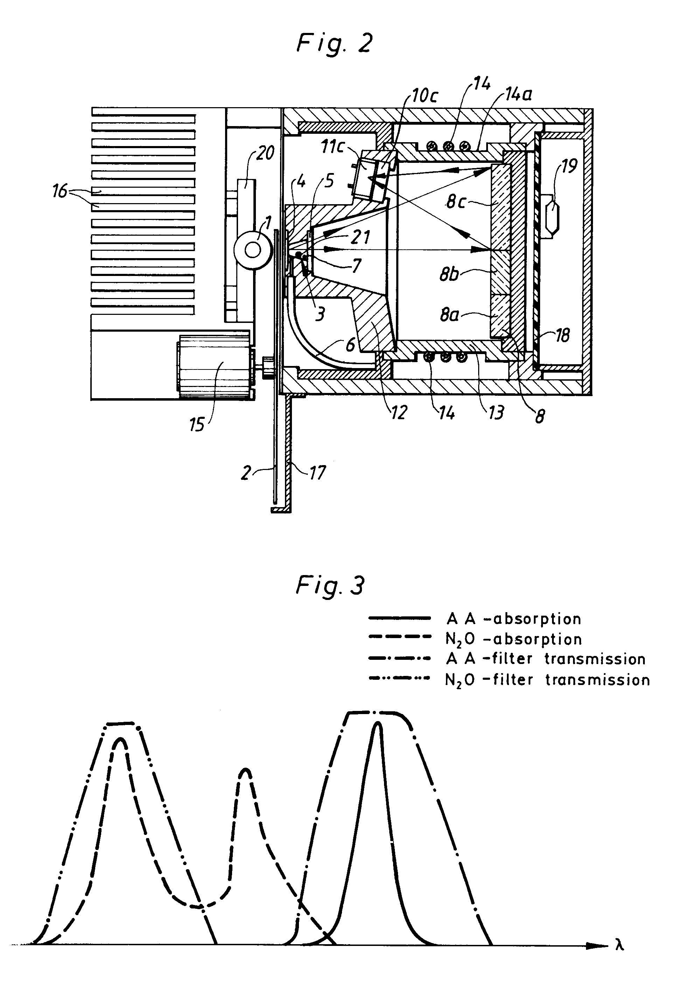

In fig 3 is shown a schematic sketch illustrating how laughing gas ($N_2O$) disturbs the analysis of anaesthesia gas (AA) if this consists of, for example, halothane, isoflurane and enflurane. The filter which is used to isolate the wavelength range where the AA absorb, unfortunately allows through a small part of one of the ranges where $N_2O$ absorbs. A change in the $NO_2$ content therefore will affect the transmission through the filter and be interpreted as a change in the AA content, and thus has to be corrected.

The correction is based on the following:

1) The $N_2O$ content is known, owing to simultaneous measurement in the $N_2O$ detector.

2) The effect of $N_2O$ on the AA-measurement can be quantitatively determined by means, for example, of calibration with a gas mixture of known $N_2O$ content.

The following is a technical description of how the compensation proceeds. For the sake of simplicity a linear connection has been assumed here between the magnitudes of the absorbent and of the concentration.

Beer-Lambert-Law:

$$Absorbent = A_x = \log (Io/I) = a_x \cdot [x]$$

$Io$ = intensity with $O_2$ in the radiation path

$I$ = intensity with sample in the radiation path

$a_x$ = calibration factor for the substance x

$[x]$ = concentration of the substance x

$A_x$ = absorbent for the substance x

Absorbents are additive. If several substances absorb we get:

$$A_{measured} = A_x + A_y + A_z \ldots$$

In the anaesthesia channel (AA) the gases AA and $N_2O$ absorb i e

$$A_{meas}^{AA} = A_{AA}^{AA} + A_{N_2O}^{AA}$$

5

with the calibration factors

$$a_{AA}^{AA} \quad \text{resp.} \quad a_{N_2O}^{AA} \; *)$$

$$*) \left( \text{Notation: } A_{\substack{\text{channel} \\ \text{substance}}} , \; a_{\substack{\text{channel} \\ \text{substance}}} \right)$$

In the laughing gas channel ($N_2O$) only $N_2O$ absorbs i e

$$A_{meas}^{N_2O} = A_{N_2O}^{N_2O}$$

with the calibration factor

$$a_{N_2O}^{N_2O}$$

In the analysis of the material AA it is [AA] which is wanted

$$A_{meas}^{AA} = A_{AA}^{AA} + A_{N_2O}^{AA} \implies A_{AA}^{AA} = A_{meas}^{AA} - A_{N_2O}^{AA} = a_{AA}^{AA} \left[ AA \right]$$

$$\text{but } A_{N_2O} = a_{N_2O} \cdot \left[N_2O\right]$$

$$\text{and } \left[N_2O\right] = A^{N_2O}_{meas} / a^{N_2O}_{N_2O}$$

$$\therefore \left[AA\right] = A^{AA}_{meas} - A^{N_2O}_{meas} \cdot \frac{a^{N_2O}_{N_2O}}{a^{AA}_{N_2O}} \bigg/ \frac{a^{AA}_{a}}{a_{AA}}$$

## PRACTICAL EMBODIMENT OF THE SUBJECT OF THE INVENTION

In fig 2 is shown in a little more detail, but still schematically, a practical embodiment of the subject of the invention. For corresponding parts the same reference designations have been used here as in fig 1. The light source used thus has been designated 1 and a rotating diaphragm 2. In the same way the cell is designated 3 and its two windows 4 and 5 respectively. The gas mixture analysed is introduced via the inlet 6 and discharged via the outlet marked as a point 7. The mirror used has been designated 8 and it comprises parts 8a,8b and 8c. The radiation path has been marked only for the mirror part 8c which directs its part of the radiation to the detector 11c via the filter 10c.

The cell, the mirror, the filter and the detectors are arranged in a rigid envelope 12 comprising, among other things, a distance tube 13 to make possible, among other things, the keeping constant of the temperature and a firm exact position of the particular item. Around the distance tube 13 has been wound a thin heating foil 14a. This heats on the one hand the distance tube 13 and the items enclosed therein, on the other hand a pipeline 14 wound outside the foil for the gas examined, which is thus also heated to a suitable temperature. Numeral 15 designates the motor for the rotating diaphragm 2 and 16 a cooling flange. Numeral 17 designates a protection for the diaphragm 2 and 18 a circuit board indicated symbolically which is connected to an amplifier 19. The circuit board 18 comprises, or is connected to, a microcomputer not shown for the control of the desired measuring process. Numeral 20 finally designates a holder for the heat source 1, e g a standard ceramic holder. A pressure gauge arranged in the measuring cell, finally, is marked 21.

The invention is not limited solely to the embodiments described above, but may be varied within the scope of the following claims.

## Claims

1. An optical gas analyzer for measuring anaesthesia gases such as halothane, isoflurane and enflurane, said analyzer comprising a source of radiation (1), means for conducting radiation obtained by said source through a gas sample and a number of optical filters (10a,10b,10c) corresponding to the number of gases analysed, each of said filters allowing through a wavelength representative for the particular gas and especially absorbed by the same, to a number of detectors (11a,11b,11c) corresponding to the number of gases analysed, means (8a,8b,8c) being provided for dividing the radiation path after passing of the gas sample for the purpose of simultaneous measurement of the gas concentration in respective detectors, **characterized** by a filter (10c) which is permeable for the wavelengths only between 8 - 14$\mu$, preferably about 8,81$\mu$, and an $N_2O$-filter (10b) and a $CO_2$-filter (10a) which are only permeable for wavelengths within 3,8 - 5$\mu$, preferably about 3,90$\mu$ and 4,26$\mu$, respectively, whereby moisture is prevented from affecting the respective measuring result.

2. A gas analyzer in accordance with claim 1, **characterized** by means (18) for correction of the absorption registered in the anaesthesia detector (11c) in dependence of the absorption registered in the $N_2O$ detector 11b.

3. A gas analyzer in accordance with claim 1, **characterized** in that the said means (8) for the division of the radiation path is constituted of a mirror arrangement which preferably divides the radiation path into a number of preferably equivalent ray bundles corresponding to the number of gases analysed.

4. A gas analyzer in accordance with anyone of the preceding claims, **characterized** by means for the conducting of the gas analysed through a cell or the like (3) with two windows (4,5) of for example $CaF_2$ (calcium fluoride) transparent for the radiation, placed in the radiation path.

5. A gas analyzer in accordance with anyone of the preceding claims, **characterized** by means (14,18) for keeping constant the temperature of the items, e g filters, mirrors and detectors together with holders for these items arranged in the radiation path, and preferably also keeping the gas analysed at a constant temperature above the dew point of any water vapour present therein.

6. A gas analyzer in accordance with anyone of the preceding claims, **characterized** by means (6,7) for the continuous conducting of the gas analysed through the radiation path and by means, e g a rotating diaphragm (2), for the regular interruption of the radiation path in order to obtain intermittent measuring values.

7. A gas analyzer in accordance with anyone of the preceding claims, **characterized** by means (18) for making use of measuring values obtained in a $CO_2$ detector for determining the end of an expiratory phase.

8. A gas analyzer in accordance with anyone of the preceding claims, **characterized** in that the source of radiation (1) consists of an IR-source which emits a continuous radiation over a large wavelength range, e g thermal lamp with an envelope of quartz glass which absorbs the thermal radiation from the incandescent filament and in this way is heated so that it in turn gives off the desired radiation.

9. A gas analyzer in accordance with claim 8, **characterized** in that the heat source is surrounded outermost by a thin metal envelope with oxidized outer surface.

10. A gas analyzer in accordance with claim 9, **characterized** in that the metal envelope consists of steel or brass, preverably balck-nickel-plated brass.

11. A gas analyzer in accordance with anyone of the preceding claims, **characterized** by a pressure gauge (21) arranged in the analyzed gas sample.

**Patentansprüche**

1. Ein optischer Gasanalysator zum Messen von Anästhesiegasen, wie Halothan, Isofluran und Enfluran, wobei der Analysator eine Strahlungsquelle (1), Mittel zum Leiten der durch diese Quelle erhaltenen Strahlung durch eine Gasprobe und eine Anzahl von optischen Filtern (10a, 10b, 10c) aufweist, die der Anzahl von analysierten Gasen entspricht, wobei jeder der Filter den Durchgang einer für das spezielle Gas repräsentativen und besonders durch dieselbe absorbierte Wellenlänge zu einer Anzahl von Detektoren (11a, 11b, 11c) erlaubt, die der Anzahl von analysierten Gasen entspricht, wobei Mittel (8a, 8b, 8c), die für die Teilung des Strahlungsweges nach dem Durchgang durch die Gasprobe zum Zweck des gleichzeitigen Messens der Gaskonzentration in dem jeweiligen Detektor vorgesehen sind, gekennzeichnet durch einen Filter (10c), der für die Wellenlängen nur zwischen 8 bis 14$\mu$ durchgängig ist, vorzugsweise um 8,81$\mu$ und einen $N_2O$-Filter (10b) und einen $CO_2$-Filter (10a), welche nur für Wellenlängen innerhalb 3,8 - 5$\mu$ durchgängig sind, vorzugsweise um 3,90$\mu$ bzw. 4,26$\mu$, wobei Feuchtigkeit davon abgehalten wird, das jeweilige Meßresultat zu beeinflussen.

2. Ein Gasanalysator nach Anspruch 1 gekennzeichnet durch Mittel (18) für die Korrektur der in dem Anästhesiedetektor (11c) registrierten Absorption in Abhängigkeit von der in dem $N_2O$-Detektor (11b) registrierten Absorption.

3. Ein Gasanalysator nach Anspruch 1, dadurch gekennzeichnet, daß die Mittel (8) für die Teilung des Strahlungsweges aus einer Spiegelanordnung besteht, die vorzugsweise den Strahlungsweg in eine Anzahl von vorzugsweise äquivalenten Strahlenbündeln teilt, die der Anzahl der analysierten Gase entsprechen.

4. Ein Gasanalysator nach einem der vorangegangenen Ansprüche gekennzeichnet durch Mittel zum Leiten des analysierten Gases durch eine Zelle 3 oder ähnliches mit zwei für die Strahlung transparenten Fenstern (4, 5) aus z.B. $CaF_2$ (Calciumfluorid), die in dem Strahlungsweg angebracht sind.

5. Ein Gasanalysator nach einem der vorangegangenen Ansprüche gekennzeichnet durch Mittel (14, 18) für das Konstanthalten der Temperatur von Gegenständen, z.B. Filtern, Spiegeln und Detektoren zusammen mit den Halterungen für diese Gegenstände, die in dem Strahlungsweg angeordnet sind, um vorzugsweise auch das analysierte Gas bei einer konstanten Temperatur oberhalb des Taupunktes jedes darin enthaltenen Wasserdampfes konstantzuhalten.

6. Ein Gasanalysator nach einem der vorangegangenen Ansprüche gekennzeichnet durch Mittel (6, 7) für das fortlaufende Leiten des analysierten Gases durch den Strahlungsweg und durch Mittel, wie z.B. eine Drehmembran (2) für das regelmäßige Unterbrechen des Strahlungsweges, um intermittierende Meßwerte zu erhalten.

7. Ein Gasanalysator nach einem der vorangegangenen Ansprüche gekennzeichnet durch Mittel (18) für das Gebrauchen der in einem $CO_2$-Detektor gemessenen Werte, um das Ende einer Ausatmungsphase zu bestimmen.

8. Ein Gasanalysator nach einem der vorangegangenen Ansprüche, dadurch gekennzeichnet, daß die Strahlungsquelle (1) aus einer IR-Quelle besteht, die eine fortlaufende Strahlung über einen breiten Wellenlängenbereich emittiert, d.h. eine thermische Lampe mit einer Hülle aus Quarzglas, die die thermische Strahlung von dem weißglühenden Faden absorbiert und auf diese Weise so erhitzt wird, daß sie ihrerseits die gewünschte Strahlung abgibt.

9. Ein Gasanalysator nach Anspruch 8, dadurch gekennzeichnet, daß die Hitzequelle ganz außen durch eine dünne Metallhülle mit oxidierter Außenoberfläche umgeben ist.

10. Ein Gasanalysator nach Anspruch 9, dadurch gekennzeichnet, daß die Metallhülle aus Stahl oder Messing besteht, vorzugsweise aus Schwarznickel-plattiertem Messing.

11. Ein Gasanalysator nach einem der vorangegangenen Ansprüche gekennzeichnet durch einen Druckmesser (21), der in der analysierten Gasprobe angeordnet ist.

**Revendications**

1. Analyseur optique de gaz pour mesurer des gaz d'anesthésie tels qu'halothane, isoflurane et enflurane, ledit analyseur comprenant une source de rayonnement (1), des moyens de guidage du rayonnement fourni par ladite source à travers un échantillon de gaz et un certain nombre de filtres optiques (10a,10b,10c) correspondant au nombre de gaz analysés, chacun de ces filtres permettant le passage d'une longueur d'onde représentative du gaz particulier et spécialement absorbée par celui-ci, vers un nombre de détecteurs (11a,11b,11c) correspondant au nombre de gaz analysés, des moyens (8a,8b,8c) étant prévus pour diviser le chemin de rayonnement après traversée de l'échantillon de gaz, dans le but de mesurer simultanément la concentration de gaz dans les détecteurs respectifs, caractérisé en ce qu'il comprend un filtre (10c) qui est perméable aux longueurs d'onde seulement entre 8 et 14 $\mu$m et de préférence de 8,81 $\mu$m environ, et un filtre $N_2O$ (10b) et un filtre $CO_2$ (10a ) qui sont seulement perméables aux longueurs d'onde comprises entre 3,8 et 5 $\mu$m et de préférence de 3,90 $\mu$m et 4,26 $\mu$m environ, respectivement, de sorte que l'humidité est empêchée d'affecter le résultat de mesure respectif.

2. Analyseur de gaz suivant la revendication 1, caractérisé en ce qu'il comprend des moyens (18) de correction de l'absorption enregistrée dans le détecteur de gaz d'anesthésie (11c), en fonction de l'absorption enregistrée dans le détecteur de $N_2O$ (11b).

3. Analyseur de gaz suivant la revendication 1, caractérisé en ce que lesdits moyens (8) de division du chemin de rayonnement sont constitués d'un agencement de miroir qui divise de préférence le chemin de rayonnement en un nombre de faisceaux, de préférence équivalents, correspondant au nombre de gaz analysés.

4. Analyseur de gaz suivant une quelconque des revendications précédentes, caractérisé par des moyens de guidage du gaz analysé à travers une cellule ou analogue (3) comportant deux fenêtres (4,5), par exemple en $CaF_2$ (fluorure de calcium) , transparentes au rayonnement et placées sur le chemin de rayonnement.

5. Analyseur de gaz suivant une quelconque des revendications précédentes, caractérisé par des moyens (14,18) pour maintenir constante la température des composants, par exemple filtres, miroirs et détecteurs ainsi que leurs montures, situés sur le chemin de rayonnement, et de préférence également pour maintenir le gaz analysé à une température constante supérieure au point de rosée de la vapeur d'eau qui peut être présente dans le gaz.

6. Analyseur de gaz suivant une quelconque des revendications précédentes, caractérisé par des moyens (6,7) pour la circulation continue du gaz à analyser en travers du chemin de rayonnement, et par des moyens, par exemple un diaphragme tournant(2), pour l'interruption régulière du chemin de rayonnement de façon à obtenir des valeurs de mesure par intermittence.

7. Analyseur de gaz suivant une quelconque des revendications précédentes, caractérisé par des moyens (18) d'utilisation des valeurs de mesure obtenues dans un détecteur de $CO_2$, pour déterminer la fin d'une phase d'expiration.

8. Analyseur de gaz suivant une quelconque des revendications précédentes, caractérisé en ce que la source de rayonnement (1) est une source de rayonnement infrarouge qui émet un rayonnement continu dans une grande plage de longueurs d'onde, par exemple une lampe thermique à enveloppe de verre de quartz qui absorbe le rayonnement thermique du filament incandescent et est ainsi chauffée de sorte qu'elle émet à son tour le rayonnement désiré.

9. Analyseur de gaz suivant la revendication 8, caractérisé en ce que la source de chaleur est entourée du côté extérieur par une enveloppe métallique mince à surface extérieure oxydée.

10. Analyseur de gaz suivant la revendication 9, caractérisé en ce que l'enveloppe métallique est en acier ou laiton, et de préférence en laiton nickelé noir.

11. Analyseur de gaz suivant une quelconque des revendications précédentes, caractérisé par un manomètre (21) placé dans l'échantillon de gaz analysé.

Fig. 1

## Fig. 2

## Fig. 3

——— A A –absorption
– – – – N₂O –absorption
–·–·–·– A A –filter transmission
–··–··–·· N₂O –filter transmission